# FASCICULE DE BREVET EUROPEEN

(11) **EP 1 044 156 B1**
(45) Date de publication et mention de la délivrance du brevet: **09.07.2003**
(21) Numéro de dépôt: 98963605.5
(22) Date de dépôt: 23.12.1998
(51) Int. Cl.: B66B 1/04, B66B 5/02

(54) **DISPOSITIF D'ENTRAINEMENT POUR ASCENSEUR HYDRAULIQUE**
ANTRIEBSEINRICHTUNG FÜR HYDRAULISCHEN AUFZUG
HYDRAULIC LIFT ACTUATING DEVICE

(30) Priorité: 29.12.1997 FR 9716609; 11.08.1998 FR 9810285
(43) Date de publication de la demande: 18.10.2000
(73) Titulaire: NK SYSTEM NV, Curaçao (AN)
(72) Inventeur: Kadoche, Emile, 78640 Villiers Saint Frédéric (FR)
(74) Mandataire: Le Bras, Hervé
(86) Numéro de dépôt international: FR9802845
(87) Numéro de publication internationale: WO99033740

(56) Documents cités:
- WO-A-94/05583
- WO-A-94/27905
- US-A- 4 761 953

## Description

La présente invention concerne un principe d'entraînement pour ascenseur ou autre installation similaire. Un dispositif d'entraînement tel que décrit dans le préambule de la revendication 1 est connu par le document US-A-4 761 953.

De façon plus précise, l'invention concerne des moyens permettant de commander le mouvement de montée et de descente de l'ascenseur ou similaire.

Dans la présente demande de brevet, pour ascenseur ou similaire, il faut entendre non seulement les ascenseurs au sens propre du terme mais également les monte-charges ou des dispositifs monte-handicapés.

La présente invention contribue principalement à la diminution de la consommation d'énergie qui est importante pour l'utilisateur, car elle nécessite moins d'énergie à chaque démarrage, donc une installation électrique plus faible. Ce détail important n'est qu'un des aspects de l'invention que nous allons développer.

Il est bien connu qu'il existe deux grands modes de réalisation du dispositif moteur permettant de commander les mouvements de montée et de descente d'un ascenseur, ces dispositifs étant soit électriques soit hydrauliques. La présente invention concerne exclusivement le domaine des ascenseurs commandés de façon hydraulique. Bien entendu, par commande hydraulique, il faut entendre des moyens qui sont alimentés avec un liquide qui n'est pas nécessairement de l'eau.

Dans les systèmes d'entraînement pour ascenseur du type hydraulique, de façon classique, on trouve un vérin dont la course permet le déplacement de la cabine, et bien sur égale à l'amplitude de la hauteur de la gaine.

Il est aisé de comprendre par exemple, que pour assurer le transport de 8 personnes, un appareil de 630 kg est nécessaire, c'est d'ailleurs le type d'appareil le plus répandu à travers le monde, et qui couvre les 80% du marché. Le poids mort d'une structure de cabine de 630 kg, est environ équivalent à la charge utile selon le fabricant, soit au total 1260 kg à déplacer.

Dans les deux modes précédemment cités, les besoins en énergie aux démarrages, et pendant toutes les phases du déplacement, grande vitesse, vitesse de ralentissement et vitesse d'approche sont importantes. Aucun moyen de récupération d'énergie n'a été mis en place à ce jour, il est vrai que le fabricant ne se soucie guère de la facture de consommation payée par l'utilisateur.

Un autre point négatif non négligeable du système hydraulique connu, et qui est constaté par tous les utilisateurs, c'est le temps d'attente après la fermeture des portes de la cabine, car l'ascenseur reste immobilisé pendant quelques secondes, pour une raison bien simple, c'est parce que le démarrage de la pompe ne peut s'effectuer directement en raison de la puissance, et le moteur d'entraînement a besoin de démarrer progressivement par un accouplement étoile triangle, et ensuite mettre sous pression le circuit hydraulique. Il faut noter que cette phase est répétitive à chaque démarrage en montée de l'appareil.

Les appareils hydrauliques existant permettent à l'usager de descendre avec l'appareil même en cas de coupure de courant, cela bien entendu est très avantageux, et très sécurisant. La présente invention va apporter un plus considérable à cet avantage.

Pour atteindre ce but, la présente invention propose donc la mise en place d'un dispositif de récupération d'énergie, et une modification fondamentale du circuit hydraulique employé dans le système connu.

L'invention concerne un dispositif d'entraînement pour ascenseur du type hydraulique comprenant un corps de vérin dans lequel est monté coulissant un piston et dont la chambre de pression est reliée par un circuit hydraulique à une pompe actionnée par un moteur et reliée à une source de fluide.

Selon l'invention ce dispositif est caractérisé par le fait que la source de fluide est constituée par un accumulateur de pression et par le fait que le circuit hydraulique comporte
un conduit de descente reliant la chambre de pression à l'entrée de la pompe et dans lequel sont montés en série une première électrovanne et un premier clapet anti-retour,
un conduit de montée reliant la sortie de la pompe à la chambre de pression et dans lequel sont montés en série une deuxième électrovanne et un deuxième clapet anti-retour,
un premier conduit de dérivation reliant l'accumulateur de pression au conduit de descente en un point situé entre le premier clapet anti-retour et l'entrée de la pompe, et dans lequel est montée une troisième électrovanne,
un deuxième conduit de dérivation reliant l'accumulateur de pression au conduit de montée en un point situé entre la deuxième électrovanne et la sortie de la pompe, et dans lequel est montée une quatrième électrovanne,
par le fait que la première électrovanne et la troisième électrovanne sont ouvertes au cours de la descente de l'ascenseur, la deuxième électrovanne et la quatrième électrovanne étant alors fermées,
et par le fait que la deuxième électrovanne et la quatrième électrovanne sont ouvertes au cours de la montée de l'ascenseur, la première électrovanne et la troisième électrovanne étant alors fermées.

D'autres caractéristiques et avantages de l'invention apparaîtront mieux à la lecture de la description qui suit de plusieurs modes de réalisation de l'invention donnés à titre d'exemples non limitatifs et en référence aux dessins annexés sur lesquels :

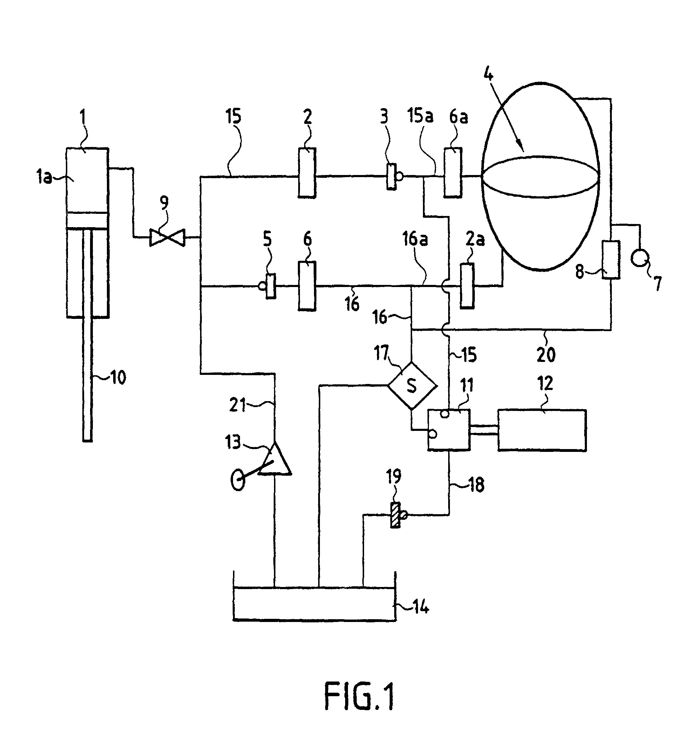

La figure 1 est une vue schématique et simplifiée du circuit hydraulique commandant le vérin de déplacement d'un ascenseur selon un premier mode de réalisation ;

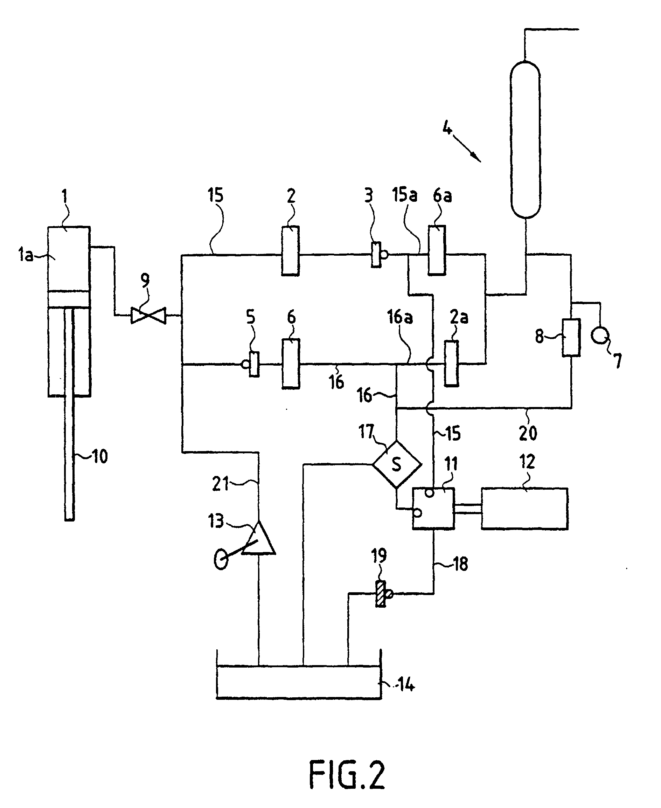

la figure 2 est une vue schématique du même circuit hydraulique selon une variante de réalisation ;
la figure 3 montre le circuit de l'huile au cours de la montée de l'ascenseur ;
la figure 4 montre le circuit de l'huile au cours de la descente de l'ascenseur ;

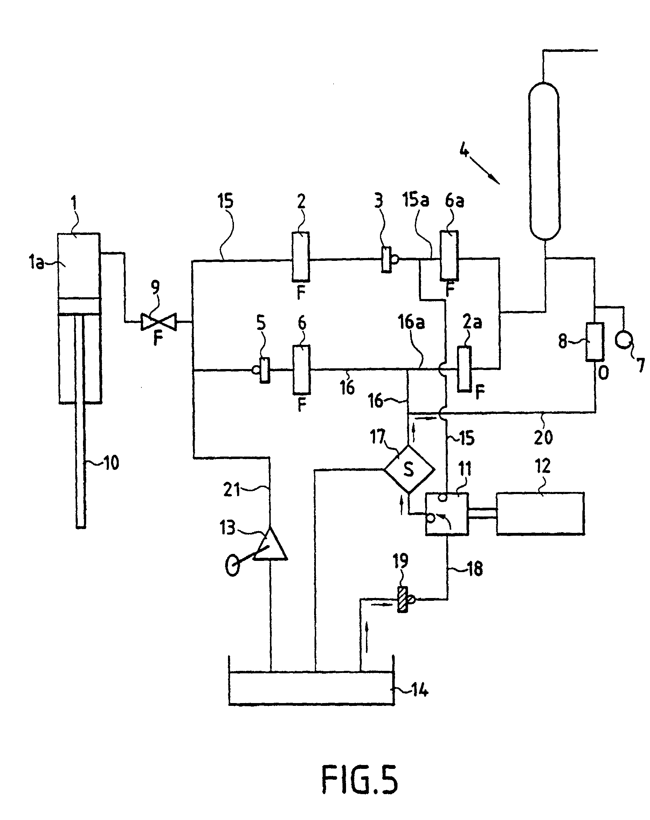

la figure 5 montre le circuit de l'huile au cours de la recharge de l'accumulateur.

Sur les dessins on a représenté par la référence 1 un corps de vérin dans lequel est monté coulissant un piston 10 muni d'une tige de piston et dont la chambre de pression 1a est reliée à une vanne de fermeture 9.

Cette vanne de fermeture 9 est reliée à l'entrée d'une pompe 11 par un conduit de descente 15 dans lequel sont montés en série une première électrovanne 2 et un premier clapet anti-retour 3, et à la sortie de la pompe 11 par un conduit de montée 16 dans lequel sont montés en série une deuxième électrovanne 6 et un deuxième clapet anti-retour 5. Une troisième électrovanne 6a est montée dans un premier conduit de dérivation 15a, prévu entre un accumulateur de pression 4 et le conduit de descente 15, ce premier conduit de dérivation 15a rejoignant le conduit de descente 15 entre le clapet anti-retour 3 et la pompe 11. Une quatrième électrovanne 2a est montée dans un deuxième conduit de dérivation 16a, prévu entre l'accumulateur 4 et le conduit de montée 16, ce deuxième conduit de dérivation 16a rejoignant le conduit de montée 16 entre l'électrovanne 6 et la pompe 11. Un clapet de surpression 17, connecté à un réservoir de l'huile 14, est prévu à la sortie de la pompe 11 sur le conduit de montée 16. L'entrée de la pompe est en outre reliée au réservoir d'huile 14 par un conduit d'aspiration 18 équipé d'un clapet anti-retour 19. Une cinquième électrovanne 8 est montée sur un troisième conduit de dérivation 20 qui relie l'accumulateur 4 au conduit de montée 16 en un point situé entre le clapet de surpression 17 et l'électrovanne 6. Un indicateur de pression 7 indique la pression dans l'accumulateur de pression 4. Enfin, la vanne de fermeture 9 est reliée au réservoir d'huile 14 par un conduit de secours 21 équipé d'une pompe manuelle 13. La pompe 11 est entraînée en rotation par un moteur 12 régulé électriquement.

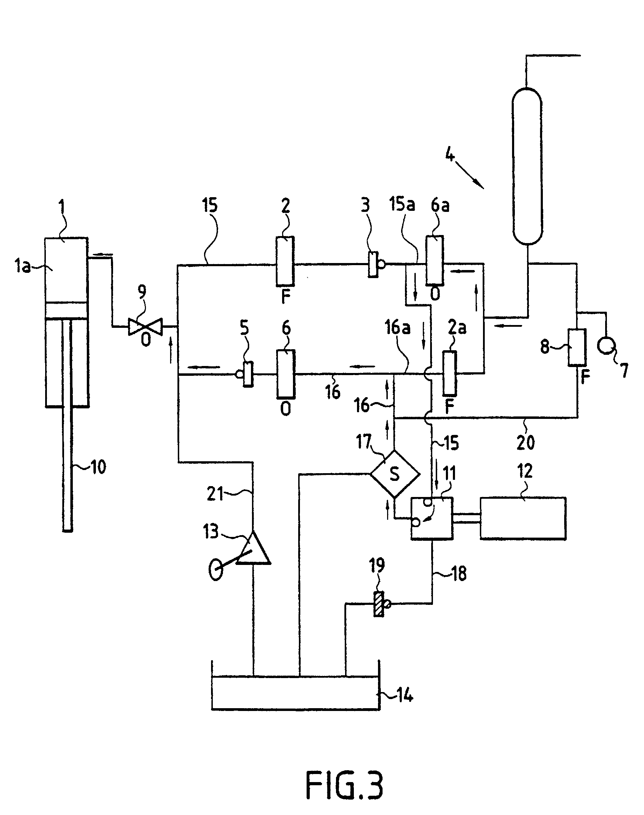

Au cours de la montée de l'ascenseur, les électrovannes 2, 2a et 8 sont fermées. Les électrovannes 6 et 6a et la vanne de fermeture 9 sont ouvertes. La circulation de l'huile entre l'accumulateur de pression 4 et la chambre du corps de vérin 1 est montrée par les flèches sur la figure 3.

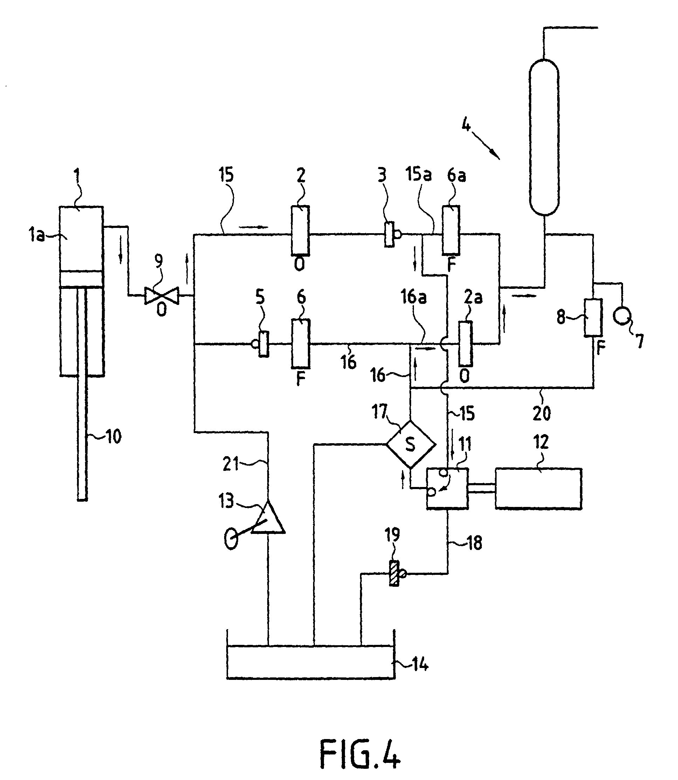

Au cours de la descente de l'ascenseur, les électrovannes 6, 6a et 8 sont fermées. Les électrovannes 2, 2a et la vanne de fermeture 9 sont ouvertes. La circulation de l'huile entre la chambre du corps de vérin 1 et l'accumulateur de pression 4 est montrée par des flèches sur la figure 4.

Lorsque l'ascenseur est immobilisé, l'ensemble des électrovannes 2, 2a, 6, 6a et 8, ainsi que la vanne de fermeture 9 sont fermées.

Lorsqu'on veut recharger l'accumulateur de pression 4 en huile, les électrovannes 2, 2a, 6 et 6a sont fermées et l'électrovanne 8 est ouverte. La pompe 11, actionnée par le moteur 12, aspire de l'huile dans le réservoir 14 par le conduit d'aspiration 18 et la refoule dans l'accumulateur 4 par le troisième conduit de dérivation 20.

Lorsque l'ascenseur est en position basse, le piston 10 est rentré dans le corps de vérin 1, et le volume de la chambre de pression 1a du vérin 1 est minimum. Dans cette condition, l'huile servant au déplacement du corps de vérin est emmagasiné sous haute pression dans l'accumulateur de pression 4. A l'inverse, lorsque l'ascenseur est en position haute, la tige du piston 10 est déployée à l'extérieur du corps de vérin 1, et le volume de la chambre de pression 1a du vérin 1 est maximum. Dans cette condition, peu d'huile se trouve dans l'accumulateur de pression 4 et la pression dans l'accumulateur de pression est à sa valeur minimale.

Au début de la montée de l'ascenseur, la pression de l'huile dans l'accumulateur de pression 4 produira les forces nécessaires pour faire monter l'ascenseur. Lorsque la pression dans l'accumulateur de pression 4 deviendra insuffisante pour compenser la charge de l'ascenseur, par suite du transfert de l'huile vers la chambre la du vérin, le moteur 12 fournira à la pompe 11 l'énergie de complément.

A l'inverse, au début de la descente de l'ascenseur, la charge de ce dernier permettra un transfert de fluide de la chambre de pression 1a du vérin 1 vers l'accumulateur de pression 4 sans l'aide du moteur 12. Lorsque la pression dans l'accumulateur de pression 4 aura atteint une valeur moyenne, le moteur 12 entraînera la pompe 11 et pompera l'huile de la chambre 1a du vérin pour l'introduire sous pression dans l'accumulateur de pression 4.

L'énergie consommée par le moteur 12 sert uniquement à compenser les différences de pression maximales existant dans la chambre de pression 1a du vérin 1 et dans l'accumulateur de pression 4 dans les positions haute et basse de l'ascenseur.

Lorsque l'indicateur de pression 7 en justifie les besoins, l'électrovanne 8 s'ouvre pour permettre la recharge de l'accumulateur 4, par la pompe 11.

Le piston 10 représenté par une tige dans le corps du vérin 1 se déploie vers l'extérieur par la pression d'huile arrivée par la vanne de fermeture 9, lorsque les électrovannes 6 et 6a sont ouvertes. Le piston rentre à l'intérieur du corps du vérin lorsque l'extrémité libre de la tige sous l'effet de la charge et par gravitation fournit elle même une pression sur le piston dès que les électrovannes 2 et 2a sont ouvertes. La pompe 11 est entraînée dans le même sens de rotation suivant les besoins en descente et montée par le moteur 12 régulé électriquement.

On comprend donc qu'en commandant le déplacement de la cabine dans le sens montée par les électrovannes 6 et 6a, la pompe 11 et le moteur 12 n'ont quasiment pas besoin de fournir d'effort, par suite de la présence dans le circuit de l'accumulateur de pression 4 qui délivre lui-même et instantanément les besoins nécessaires pour mouvoir l'appareil. L'on pourra constater un démarrage immédiat de l'ascenseur, et sans attente.

Le cycle de déplacement en montée de la cabine s'inverse inexorablement. Le déplacement de la cabine en descente sous l'effet de la gravitation, créé une pression à la base du vérin, l'invention qui nous intéresse est d'exploiter à bon escient cette énergie afin de la réemployer.

La pompe 11 ne fournit aucun effort, la majeure partie du temps de la descente de l'ascenseur, et aurait même tendance à produire du courant, cette énergie est canalisée vers l'accumulateur de pression 4. La pompe 11 assure les besoins liés à la vitesse de l'appareil, assurant ainsi un débit parfait de la quantité d'huile nécessaire au vérin.

L'électrovanne 8 permet de recharger l'accumulateur si besoin est, et suivant la pression indiquée sur le contrôleur de pression 7. Cette action est prévue pour la première mise en service, et dans le cas de travaux ou de stationnement de la cabine en bas de la gaine, ou pour parer à une fuite éventuelle. La charge en exploitation courante de l'accumulateur 4 est prévue et assurée par l'action du piston 10.

La pompe à main 13 est installée entre le réservoir 14 et la vanne de fermeture 9, sa présence est purement symbolique. Elle est prévue pour un déplacement éventuel du vérin avant la mise en place de l'accumulateur 4.

En cas de panne électrique provenant du réseau, l'ascenseur pourra se déplacer en montée pour libérer les passagers sans apport d'énergie et indifféremment en descente. Il suffit pour cela de prévoir une alimentation basse tension 12 ou 24 volts sur les électrovannes 2, 2a. pour la descente ou sur les électrovannes 6, 6a pour la montée. Les électrovannes 6 et 6a lorsque celles-ci sont ouvertes permettent ainsi à l'accumulateur de pression 4 de libérer l'énergie stockée, et de mouvoir le piston 10 dans le sens montée, même en cas de coupure de courant. Le piston 10 peut être mu dans le sens de la descente, même en cas de coupure de courant en ouvrant les électrovannes 2 et 2a, ce qui permet ainsi la descente de la cabine et charge de nouveau l'accumulateur de pression 4, le surplus d'huile étant déversé dans le réservoir 14.

L'installation électrique qui est habituellement de 15 à 40 kw peut descendre à 5 kw. Un calcul rapide permet d'imaginer que le gain en consommation d'énergie en 2 ou 3 ans rembourse à lui seul, la fourniture et l'installation de l'ascenseur.

La pompe de secours manuelle 13 peut être remplacée par une vanne avec un bouton poussoir permettant de libérer l'huile à débit réduit depuis l'accumulateur de pression 4 ou la chambre de pression 1a directement dans le réservoir 14.

L'électrovanne 8 peut avantageusement être supprimée, l'électrovanne 2a étant alors dans la position ouverte, lorsqu'on recharge l'accumulateur de pression 4. Dans ce cas, le troisième conduit de dérivation est supprimé.

## Revendications

1. Dispositif d'entraînement pour ascenseur hydraulique comprenant un corps de vérin (1) dans lequel est monté coulissant un piston (10) et dont la chambre de pression (1a) est reliée par un circuit hydraulique à une pompe (11) actionnée par un moteur (12) et reliée à une source de fluide,
la source de fluide étant constituée par un accumulateur de pression (4), **caractérisé par le fait que** le circuit hydraulique comporte
un conduit de descente (15) reliant la chambre de pression (1a) à l'entrée de la pompe (11) et dans lequel sont montés en série une première électrovanne (2) et un premier clapet anti-retour (3),
un conduit de montée (16) reliant la sortie de la pompe (11) à la chambre de pression (1a) et dans lequel sont montés en série une deuxième électrovanne (6) et un deuxième clapet anti-retour (5),
un premier conduit de dérivation (15a) reliant l'accumulateur de pression (4) au conduit de descente (15) en un point situé entre le premier clapet anti-retour (3) et l'entrée de la pompe (11), et dans lequel est montée une troisième électrovanne (6a),
un deuxième conduit de dérivation (16a) reliant l'accumulateur de pression (4) au conduit de montée (16) en un point situé entre la deuxième électrovanne (6) et la sortie de la pompe (11), et dans lequel est montée une quatrième électrovanne (2a),
**par le fait que** la première électrovanne (2) et la troisième électrovanne (2a) sont ouvertes au cours de la descente de l'ascenseur, la deuxième électrovanne (6) et la quatrième électrovanne (6a) étant alors fermées,
et **par le fait que** la deuxième électrovanne (6) et la quatrième électrovanne (6a) sont ouvertes au cours de la montée de l'ascenseur, la première électrovanne (2) et la troisième électrovanne (2a) étant alors fermées.

2. Dispositif selon la revendication 1, **caractérisé par le fait qu'**il est prévue, entre la chambre de pression (1a) et les conduits de descente (15) et de montée (16), une vanne de fermeture (9) qui est ouverte lors des mouvements de descente ou de montée de l'ascenseur.

3. Dispositif selon la revendication 2, **caractérisé par le fait qu'**il comporte en outre un réservoir (14) relié à la vanne de fermeture (9) par un conduit de secours (21) équipé d'une pompe manuelle de secours (13).

4. Dispositif selon l'une quelconque des revendications 1 à 3, **caractérisé par le fait que** l'entrée de la pompe (11) est reliée à un réservoir (14) par un conduit d'aspiration équipé d'un clapet anti-retour (19).

5. Dispositif selon la revendication 4, **caractérisé par le fait que** seule la quatrième électrovanne (2a) est ouverte lors de l'opération de recharge de l'accumulateur de pression (4) par la pompe (11).

6. Dispositif selon l'une quelconque des revendications 1 à 5, **caractérisé par le fait qu'**un clapet de surpression (17) est prévu à la sortie de la pompe (11) sur le conduit de montée (16).

7. Dispositif selon l'une quelconque des revendications 1 à 6, **caractérisé par le fait que** l'accumulateur de pression (4) est équipé d'un indicateur de pression (7).

8. Dispositif selon les revendications 6 et 7, **caractérisé par le fait qu'**il est prévu en outre un troisième conduit de dérivation (20) entre l'accumulateur de pression (4) et le conduit de montée (16) en un point situé entre le clapet de surpression (17) et la deuxième électrovanne (6).

## Patentansprüche

1. Antriebsvorrichtung für hydraulische Aufzüge mit einem Zylindergehäuse (1), in dem ein Kolben (10) gleitend montiert ist und dessen Druckkammer (1a) durch einen Hydraulikkreis mit einer Pumpe (11) verbunden ist, die durch einen Motor (12) angetrieben wird und mit einer Fluidquelle verbunden ist, wobei die Fluidquelle von einem Druckspeicher (4) gebildet ist,
**dadurch gekennzeichnet, dass** der Hydraulikkreis umfasst
- eine Fallleitung (15), die die Druckkammer (1a) mit dem Einlass der Pumpe (11) verbindet und in der hintereinander ein erstes Magnetventil (2) und ein erstes Rückschlagventil (3) angebracht sind,
- eine Steigleitung (16), die den Auslass der Pumpe (11) mit der Druckkammer (1a) verbindet und in der hintereinander ein zweites Magnetventil (6) und ein zweites Rückschlagventil (5) angebracht sind,
- eine erste Bypass-Leitung (15a), die den Druckspeicher (4) mit der Fallleitung (15) an einem Punkt verbindet, der zwischen dem ersten Rückschlagventil (3) und dem Einlass der Pumpe (11) liegt, und in der ein drittes Magnetventil (6a) angebracht ist,
- eine zweite Bypass-Leitung (16a), die den Druckspeicher (4) mit der Steigleitung (16) an einem Punkt verbindet, der zwischen dem zweiten Magnetventil (6) und dem Auslass der Pumpe (11) liegt, und in der ein viertes Magnetventil (2a) angebracht ist,
dass das erste Magnetventil (2) und das dritte Magnetventil (2a) während der Abwährtsfahrt des Aufzugs geöffnet sind, wobei das zweite Magnetventil (6) und das vierte Magnetventil (6a) dann geschlossen sind,
und dass das zweite Magnetventil (6) und das vierte Magnetventil (6a) während der Aufwärtsfahrt des Aufzugs geöffnet sind, wobei das erste Magnetventil (2) und das dritte Magnetventil (2a) dann geschlossen sind.

2. Vorrichtung nach Anspruch 1,
**dadurch gekennzeichnet, dass** zwischen der Druckkammer (1a) und der Fall- (15) und Steigleitung (16) ein Absperrventil (9) vorgesehen ist, das bei der Abwärts- oder Aufwärtsbewegung des Aufzugs geöffnet ist.

3. Vorrichtung nach Anspruch, 2
**dadurch gekennzeichnet, dass** sie ferner einen Behälter (14) umfasst, der mit dem Absperrventil (9) durch eine Hilfsleitung (21) verbunden ist, die mit einer manuellen Hilfspumpe (13) ausgestattet ist.

4. Vorrichtung nach einem der Ansprüche 1 bis 3,
**dadurch gekennzeichnet, dass** der Einlass der Pumpe (11) mit einem Behälter (14) durch eine Ansaugleitung verbunden ist, die mit einem Rückschlagventil (19) ausgestattet ist.

5. Vorrichtung nach Anspruch 4,
**dadurch gekennzeichnet, dass** nur das vierte Magnetventil (2a) während des Aufladens des Druckspeichers (4) durch die Pumpe (11) geöffnet ist.

6. Vorrichtung nach einem der Ansprüche 1 bis 5,
**dadurch gekennzeichnet, dass** ein Überdruckventil (17) am Auslass der Pumpe (11) an der Steigleitung (16) vorgesehen ist.

7. Vorrichtung nach einem der Ansprüche 1 bis 6,
**dadurch gekennzeichnet, dass** der Druckspeicher (4) mit einem Druckanzeiger (7) ausgestattet ist.

8. Vorrichtung nach den Ansprüchen 6 und 7,
**dadurch gekennzeichnet, dass** ferner eine dritte Bypass-Leitung (20) zwischen dem Druckspeicher (4) und der Steigleitung (16) an einem Punkt vorgesehen ist, der zwischen dem Überdruckventil (17) und dem zweiten Magnetventil (6) liegt.

## Claims

1. A drive device for a hydraulic elevator, the device comprising an actuator cylinder (1) in which a piston (10) is slidably mounted and having a pressure chamber (1a) connected via a hydraulic circuit to a pump (11) driven by a motor (12) and connected to a source of fluid, the source of fluid being constituted by a pressure accumulator (4),
**characterized by** the fact that the hydraulic circuit comprises:
- a down duct (15) connecting the pressure chamber (1a) to the inlet of the pump (11) and in which there are connected in series a first electrically controlled valve (2) and a first check valve (3);
- an up duct (16) connecting the outlet of the pump (11) to the pressure chamber (1a), and in which there are connected in series a second electrically controlled valve (6) and a second check valve (5);
- a first parallel duct (15a) connecting the pressure accumulator (4) to the down duct (15) at a point situated between the first check valve (3) and the inlet to the pump (11), and in which a third electrically controlled valve (6a) is connected; and
- a second parallel duct (16a) connecting the pressure accumulator (4) to the up duct (16) at a point situated between the second electrically controlled valve (6) and the outlet from the pump (11), and in which a fourth electrically controlled valve (2a) is connected;
by the fact that the first electrically controlled valve (2) and the third electrically controlled valve (2a) are open while the elevator is moving downwards, the second electrically controlled valve (6) and the fourth electrically controlled valve (6a) then being closed; and
by the fact that the second electrically controlled valve (6) and the fourth electrically controlled valve (6a) are open while the elevator is moving upwards, the first electrically controlled valve (2) and the third electrically controlled valve (2a) then being closed.

2. A device according to claim 1, **characterized by** the fact that a closure valve (9) is provided between the pressure chamber (1a) and the up and down ducts (15, 16), which closure valve is open during both upward and downward movement of the elevator.

3. A device according to claim 2, **characterized by** the fact that it further comprises a tank (14) connected to the closure valve (9) via an emergency duct (21) fitted with an emergency manual pump (13).

4. A device according to any one of calms 1 to 3, **characterized by** the fact that the inlet of the pump (11) is connected to a tank (14) via an admission duct fitted with a non-return valve (19).

5. A device according to claim 4, **characterized by** the fact that only the fourth electrically controlled valve (2a) is open while the pressure accumulator (4) is being recharged by the pump (11).

6. A device according to any one of claims 1 to 5, **characterized by** the fact that a pressure release valve (17) is provided at the outlet from the pump (11) on the up duct (16).

7. A device according to any one of claims 1 to 6, **characterized by** the fact that the pressure accumulator (4) is fitted with a pressure indicator (7).

8. A device according to claims 6 and 7, **characterized by** the fact that a third parallel duct (20) is also provided between the pressure accumulator (4) and the up duct (16) at a point situated between the pressure release valve (17) and the second electrically controlled valve (6).
